# EUROPEAN PATENT APPLICATION

(11) **EP 2 602 092 A1**
(43) Date of publication of application: **12.06.2013**
(21) Application number: 12194691.7
(22) Date of filing: 28.11.2012
(51) Int. Cl.: B29C 70/42, B29C 70/54, B29D 99/00

(54) **Integral stiffener**

(30) Priority: 07.12.2011 GB 201120994
(71) Applicant: AIRBUS OPERATIONS LIMITED, Filton Bristol Bristol BS99 7AR (GB)
(72) Inventor: Stewart, David Mark, Bristol BS99 7AR (GB)
(74) Representative: Scott, Alistair Francis

(57) **Abstract**

An integral composite wing spar (12) and composite stiffener (32) formed by simultaneous curing of the matrix components in a specialised tool. A method of manufacture and tool is also provided.

## Description

The present invention is concerned with a spar for an aircraft fixed aerodynamic structure. More specifically, the present invention is concerned with a composite spar having an integral stiffener. The present invention is further concerned with a method of manufacturing a spar comprising an integral stiffener.

It is generally known to improve the mechanical properties of aircraft components using reinforcements or stiffeners. Stiffeners can provide additional rigidity and reduced deformation in regions where concentrated loads are experienced, such as attachment points.

A problem with such local reinforcements is that fasteners are required in order to secure them to the adjacent components. This creates local stress concentrations. Furthermore, thermal effects may cause unequal strains in the stiffener and the adjacent component, thus causing high stresses to develop which could result in a need for early replacement or repair.

A further problem in the field of aircraft movable control surface attachment is the necessity to manage the loads introduced into a fixed aerodynamic structure spar from a rib to which the control surface is movably mounted. For example, known spoiler ribs extend from two attachment points on the wing spar (one at a top edge, and one at a bottom edge) to meet at a spoiler attachment lug. The two attachment points are therefore connected to both the wing spar and the wing skins, and are spaced apart, all of which features are designed to manage the high loads imparted by the spoiler.

A problem with the known approach is that because the attachment points are positioned at either end (top and bottom in the case of a wing) of the spar, each rib must be manufactured to fit at a specific point along the spar. This is because, in this example, the wing skins typically converge moving towards the wing tip. In addition, variations in wing skin geometry often necessitate shimming and / or fettling of the rib to fit. Similar problems arise with other fixed aerodynamic structures which change in thickness such as stabilisers.

It is an object of the present invention to overcome or at least mitigate the above mentioned problems.

According to the invention there is provided a method of manufacturing an aircraft structure comprising the steps of:
providing a structural member mould part at least partially defining a first part of a mould surface of an aircraft structural member,
providing a stiffener mould part at least partially defining a mould surface of an aircraft stiffener,
applying a pre-cured stiffener composite material component to the stiffener mould part,
assembling the structural member mould part and the stiffener mould part, such that the pre-cured stiffener composite material component defines a second part of the mould surface of the aircraft structural member,
applying a pre-cured structural member composite material component to the assembled mould in contact with the first and second parts of the mould surface of the aircraft structural member,
simultaneously curing the structural member and stiffener to form an integral aircraft fixed structural member and stiffener.

By "pre-cured composite material component" we mean one of several possibilities- for example just fibres (which can be later impregnated with matrix), a pre-preg material or a partially impregnated material or even a staged (part-cured) composite material.

Advantageously, providing an integrated composite stiffener which undergoes final curing at the same time as the e.g. wing spar body means that the load transfer between the two components is mainly taken by the matrix bond. Where fasteners are still required to attach the spoiler rib, any negative effects of the fastener holes in forming local stress concentrations are mitigated because the majority of the load from the spoiler rib is shared between the stiffener and spar. In other words the load from the rib is evenly distributed across the contact area between the stiffener and spar, thus eliminating the high point loads associated with a spar and stiffener connected by only mechanical fasteners.

Further, the provision of a stiffener integrated into a wing spar, and the associated increase in load capacity allows the attachment point of a spoiler rib to move from the extremities of the rib to the central area. The amount of stiffening available using the present invention is even sufficient to cantilever the spoiler rib from the centre of the spar, meaning that a universal rib can be used all the way along the wing, reducing cost and complexity.

Preferably the first and second parts of the mould surface of the aircraft structural member are substantially continuous, more preferably the first and second parts of the mould surface of the aircraft structural member are co-planar, and contiguous.

At least one of the pre-cured composite material components may be a pre-impregnated fibre component.

Preferably the mould parts are releasably assembled to allow assembly, disassembly and reassembly. Preferably the mould parts are assembled with mechanical fasteners. The first and second parts of the mould surface of the aircraft structural member are preferably substantially C-shaped in cross section.

It will be understood that the structural member for a fixed aerodynamic structure could be, for example, a leading or trailing edge spar for a wing or stabiliser.

Preferably the method comprises the step of machining a rib attachment feature into the integral fixed structural member and stiffener after curing. The rib attachment feature preferably passes through both the fixed structural member and the stiffener.

Preferably the member matrix component and the stiffener matrix component are joined along an inward facing surface of the structural member, where the structural member is part of a box section. If, for example the structural member is part of an aircraft wing box then the join is along the forward facing surface of the a rear spar in use. The member matrix component and the stiffener matrix component are also preferably joined along at least one of an upward and downward facing surface of the structural member in use. The member matrix component and the stiffener matrix component may be joined along both of an upward and downward facing surface of the structural member in use.

Preferably, the structural member defines a concavity in which at least part of the stiffener is nested.

Preferably the structural member is part of a box assembly, and the upward and downward facing surfaces of the structural member taper away from each other in an inward facing direction of the box.

A series of mechanical attachment bores may be provided through an overlapping area of the composite structural member and stiffener.

Preferably there is provided a rib for attachment of a movable control surface, in which the rib and the stiffener sandwich the structural member therebetween.

According to a second aspect of the invention there is provided a mould tool assembly for the manufacture of an aircraft structure, the assembly comprising:
a structural member mould tool part, and,
a stiffener mould tool part,
in which the mould tool parts are configured to be assembled to place a pre-cured structural member and stiffener in contact for simultaneous curing.

Preferably the mould tool parts are configured such that when assembled they form a single continuous mould surface, and more preferably the stiffener mould tool part is configured to form a single continuous mould surface with the structural member mould tool part when the stiffener mould tool part has a predetermined thickness of composite material (for example a pre-preg layer) applied thereto.

Preferably:
the structural member mould tool part comprises a male formation for moulding a female part of a structural member,
the stiffener mould tool part comprises a male formation for moulding a female part of a stiffener,
and in which the male formation of the structural member mould tool comprises a formation for receiving the male formation of the stiffener mould tool.

Preferably the structural member mould tool and stiffener mould tool comprise corresponding joining features for separable mechanical joining in use.

Preferably the structural member is a spar for a wing or stabiliser.

Advantageously, this method of manufacture removes the requirement for any mechanical fasteners which would increase the cost and time of assembly. Furthermore, the finished product is much stronger and has fewer stress concentrations than a mechanically fastened stiffener.

An example fixed structural member for an aerodynamic structure and method of manufacturing the same in accordance with the present invention will now be described with reference to the following figures in which:-
FIGURE 1a is a side view of an assembly having a wing spar manufactured in accordance with the present invention;
FIGURE 1b is a section view of the assembly of Figure 1a;
FIGURE 2a is a side view of a stiffener manufactured in accordance with the present invention;
FIGURE 2b is a section view of the stiffener of Figure 2a along line B-B;
FIGURE 3a is a top view of a part of a mould tool for use in a manufacturing method in accordance with the present invention;
FIGURE 3b is a section view along B-B of Figure 3a;
FIGURE 3c is a section view along line C-C of Figure 3a;
FIGURE 4a is a side view of a part of a mould tool for use in a manufacturing method in accordance with the present invention;
FIGURE 4b is top view of the tool part of Figure 4a;
FIGURE 4c is a side view of the tool part of Figure 4a having a composite fibre laid thereupon;
FIGURE 4d is a top view of the tool part of Figure 4a having a composite fibre laid thereupon;
FIGURE 5a is a view of the tools parts of Figures 3a and 4a in an assembled condition;
FIGURE 5b is a section view along line B-B of Figure 5a;
FIGURE 6a is a similar view to Figure 5a;
FIGURE 6b is a section view along line B-B of Figure 6a; and
FIGURE 6c is a top view of a mould tool part.

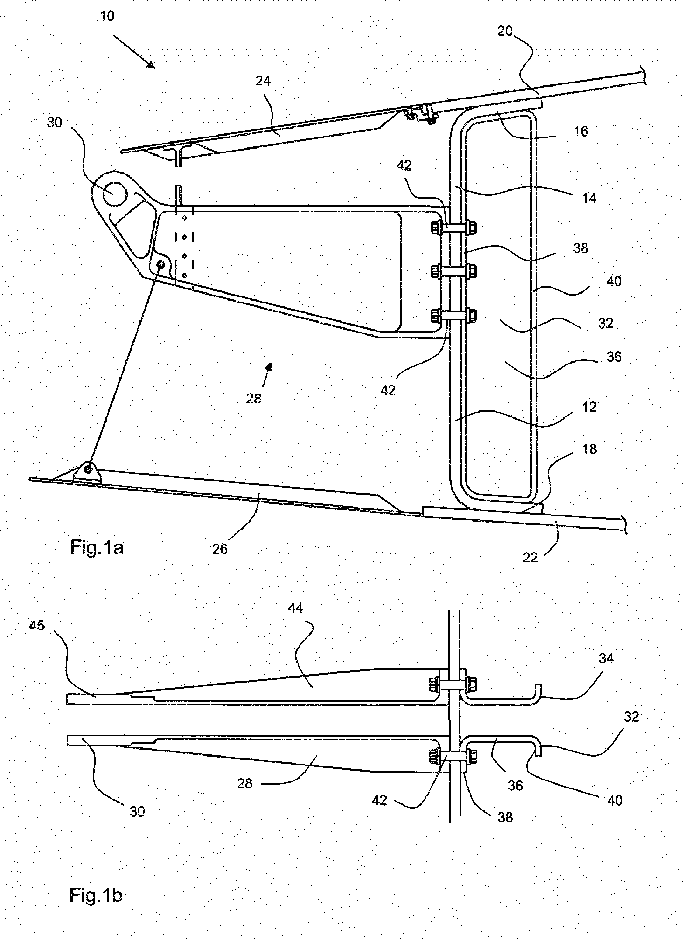

Referring to Figure 1a, a trailing edge wing spar assembly 10 comprises a wing spar body 12 being generally c-shaped, having a central plate 14 and upper limb 16 and a lower limb 18.

The spar body 12 extends substantially the entire width of the wing.

An upper wing skin 20 projects rearwardly of the body 12 and is attached to the upper limb 16. A lower skin 22 is attached to the lower limb 18 and extends past the spar body 12 in a rearward direction. Upper and lower shroud panels 24, 26 are provided extending from the upper and lower skin 20, 22 respectively.

A first spoiler rib 28 extends rearwardly from the plate 14 of the spar body 12 and comprises a lug 30 for the rotatable attachment of a spoiler. A second, mirror image spoiler rib 44 is provided proximate the first spoiler rib 28 (as shown in Figure 1b), having a lug 45 concentric with the lug 30 for attachment of a spoiler.

A first stiffener 32 is provided forward of the spar body 12. A second stiffener 34, as shown in Figure 1b, is provided proximate the first stiffener 32 and is a mirror image thereof. As can be seen in Figure 1b, the stiffeners 32, 34 are substantially c-shaped in cross-section and with reference to the first stiffener 32, comprise a plate 36, a first limb 38 and a second limb 40 projecting therefrom. The plates 36 of the first and second stiffeners 32, 34 face each other and are substantially offset.

As shown in Figure 1a, the first spoiler rib 28 is bolted through both the plate 14 of the spar body 12 and into the first limb 38 of the first stiffener 32 via mechanical fastening bolts 42. The second spoiler rib 44 attaches to the second stiffener 34 in the same manner.

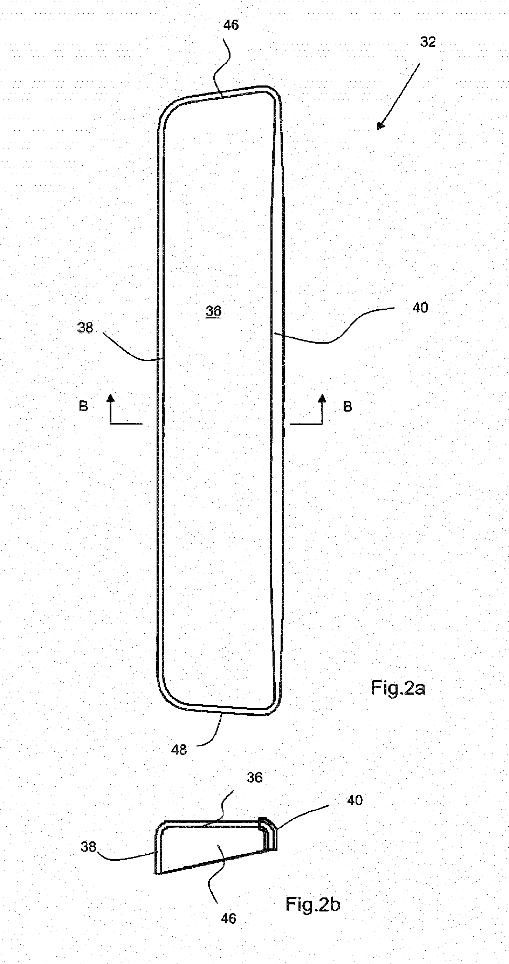

Referring to Figures 2a and 2b, the first stiffener 32 is shown in more detail. As described above, the first stiffener 32 comprises a plate 36 having a first limb 38 and a second limb 40 projecting either side therefrom, so as to define a u-section as shown in Figure 2b. The plate 36 also defines an upper flange 46 and a lower flange 48. The plate 36 joins each of the limbs 38, 40 and the flanges 46, 48 at a filleted corner so as to aid removal from a mould tool.

It will also be noted that at the second limb 40 has further layers of composite material built up thereon via tape.

According to the present invention, the spar body 12 and the stiffeners 32, 34 are formed integrally as follows.

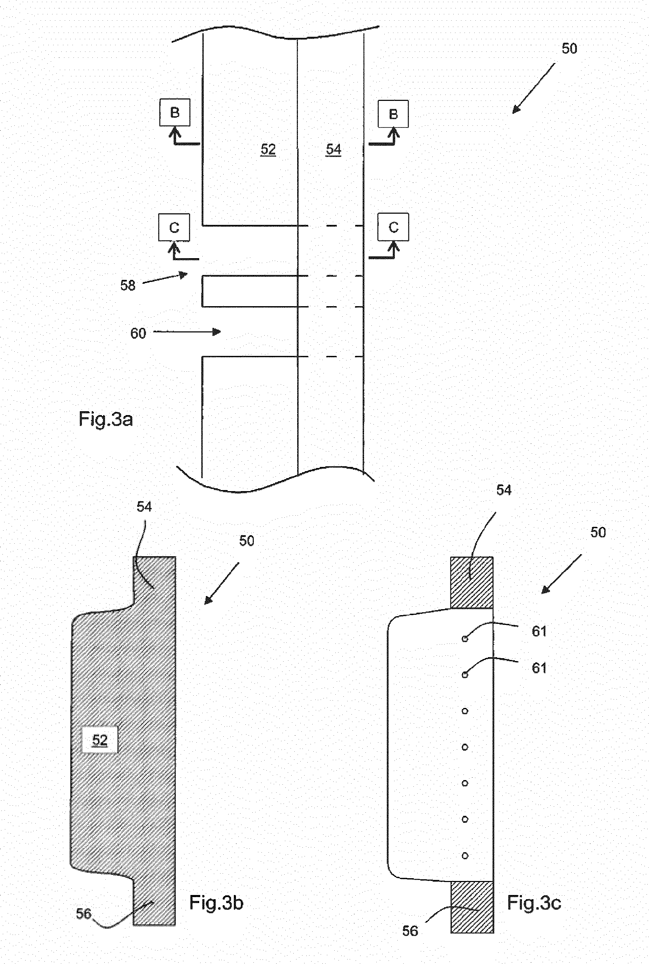

Turning to Figure 3a, a spar mould tool 50 comprises a male profile 52 having a male profile corresponding to the female profile of the spar. Referring to Figure 3b, lugs 54, 56 project from either side of the profile 52 in order to mount the mould tool.

Referring to the section shown in Figure 3c, the profile 52 is interrupted at this position, and only the lugs 54, 56 continue to run in a spanwise direction. As can be seen in Figure 3a, two gaps 58, 60 are provided next to each other in the male profile 52. A series of bolt holes 61 are provided on an exposed surface of the tool 50 between the lugs 54, 56.

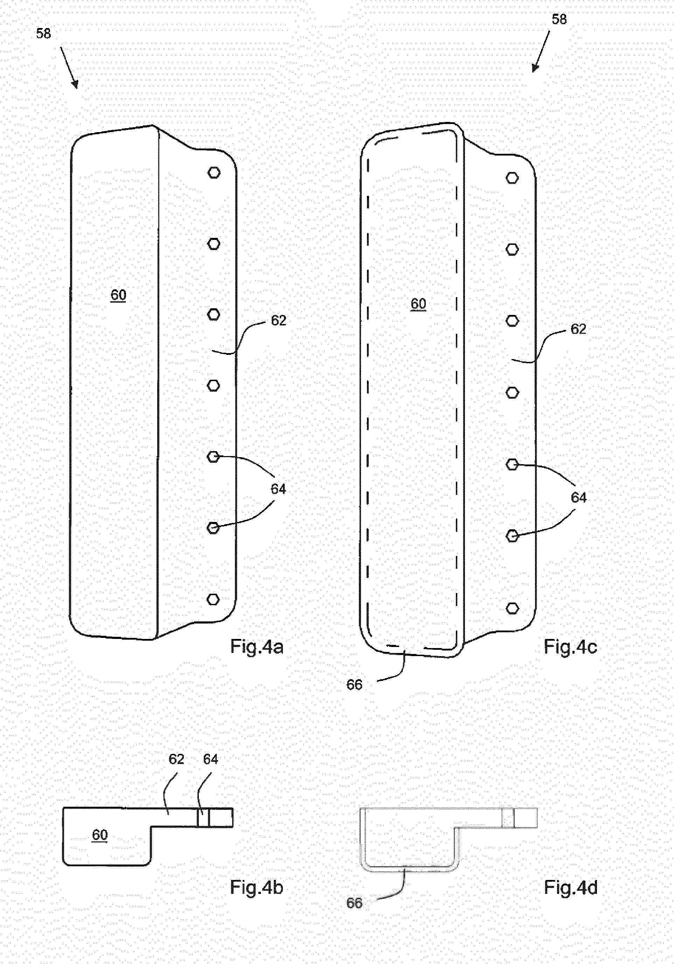

Turning to Figure 4a and 4b, a mould tool 58 for the second stiffener 34 is shown. The mould tool 58 comprises a male profile 60 having an attachment flange 62 projecting therefrom. The male profile 60 is shaped to the desired shape of the stiffener 34. The flange 62 defines a plurality of bolt holes 64.

Turning to Figures 4c and 4d, the mould tool 58 is shown with a composite fibre layer 66 deposited thereon. As can be seen in Figure 4d, the composite fibre layer forms the shape of the second stiffener 34.

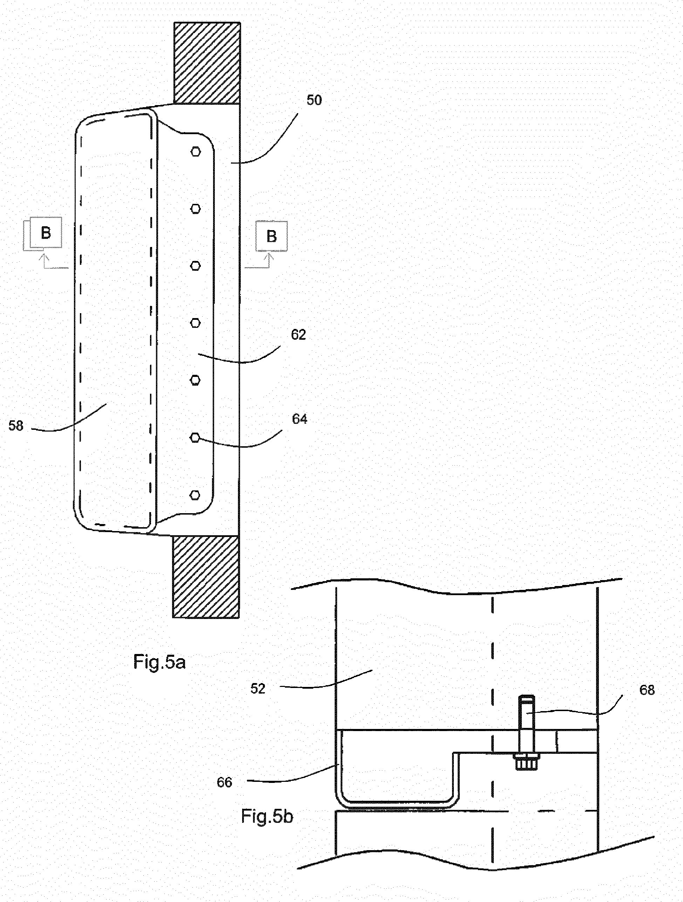

Turning to Figures 5a and 5b, the stiffener mould tool 58 is attached to the spar mould tool 50 by mechanical fasteners 68 being passed through both the bores 64 in the flange 62 into the bores 61 in the body of the mould tool 50.

Once the mould tool 50 is in position, as shown in Figures 5a and 5b, the stiffener fibre layer 66 is flush with the profile 52 to form a continuous male profile on which to mould the spar. A fibre layer is then be applied over the profile 52 of the spar mould tool 50.

One the spar fibre has been applied to the mould tool, the matrix material is introduced and the spar body 12 and the stiffener 34 are simultaneously cured in order to form an integral component.

The matrix material may be introduced in any known manner; the important thing is that the matrix forming the spar and the stiffener are in contact when cured. The matrix may be pre-impregnated into the fibre material when it is laid up on the moulds, or alternatively it may be introduced subsequently (i.e. forming a common moulded matrix with separate fibre components).

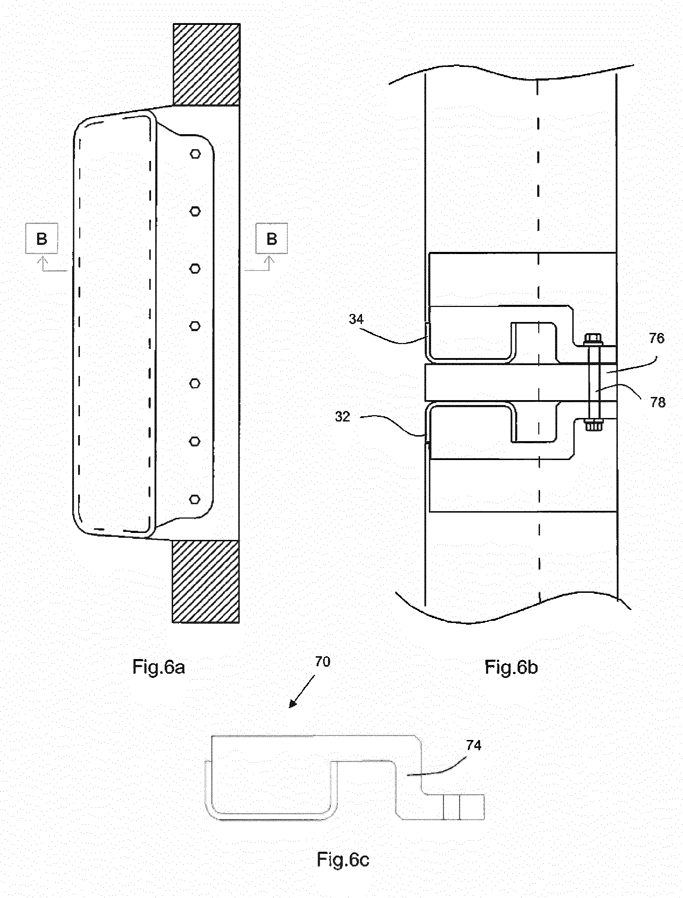

Turning to Figures 6a to 6c, the process is shown for both first and second stiffeners 32, 34. It will be noted that a mould tool 70 for the stiffeners is slightly different in that a flange 72 comprises an L-section 74 such that the tools 70 for both the stiffeners 32, 34 can be abutted to a central portion 76 and fastened using a mechanical fastener 78 through both stiffener tool flanges.

Once the stiffener and spar have been co-cured, a formation such as a bore may be formed through their common thickness for the insertion of a mechanical fastener to attach e.g. a rib for a moveable control surface. Figure 1a shows such fasteners in the form of bolts 42.

It will be noted that variations fall within the scope of the present invention. The spar may be any structural member in a wing or stabiliser, or other fixed aerodynamic structure of an aircraft.

Any other fastening method may be used between the various mould tools in order to keep them in position. For example, a mechanical sliding interface may be used instead of mechanical fasteners.

## Claims

1. A method of manufacturing an aircraft structure comprising the steps of:
providing a structural member mould part at least partially defining a first part of a mould surface of an aircraft structural member,
providing a stiffener mould part at least partially defining a mould surface of an aircraft stiffener,
applying a pre-cured stiffener composite material component to the stiffener mould part,
assembling the structural member mould part and the stiffener mould part, such that the pre-cured stiffener composite material component defines a second part of the mould surface of the aircraft structural member,
applying a pre-cured structural member composite material component to the assembled mould in contact with the first and second parts of the mould surface of the aircraft structural member,
simultaneously curing the structural member and stiffener to form an integral aircraft fixed structural member and stiffener.

2. A method of manufacturing an aircraft fixed aerodynamic structure according to claim 1 in which the first and second parts of the mould surface of the aircraft structural member are substantially continuous.

3. A method of manufacturing an aircraft fixed aerodynamic structure according to claim 2 in which the first and second parts of the mould surface of the aircraft structural member are co-planar.

4. A method of manufacture according to any preceding claim in which at least one of the pre-cured composite material components is a pre-impregnated fibre component.

5. A method of manufacture according to any preceding claim in which the mould parts are releasably assembled.

6. A method of manufacture according to claim 5 in which the mould parts are assembled with mechanical fasteners.

7. A method of manufacture according to any preceding claim in which the first and second parts of the mould surface of the aircraft structural member are substantially C-shaped in cross section.

8. A method of manufacture according to any preceding claim in which the aircraft structural member is a wing or stabiliser spar.

9. A method of manufacture according to claim 8 comprising the step of machining a rib attachment feature into the integral fixed structural member and stiffener after curing.

10. A method of manufacture according to claim 9 in which the rib attachment feature passes through both the fixed structural member and the stiffener.

11. A mould tool assembly for the manufacture of an aircraft structure, the assembly comprising:
a structural member mould tool part, and,
a stiffener mould tool part,
in which the mould tool parts are configured to be assembled to place a pre-cured structural member and stiffener in contact for simultaneous curing.

12. A mould tool assembly according to claim 11 in which the mould tool parts are configured such that when assembled they form a single continuous mould surface.

13. A mould tool assembly according to claim 12 in which the stiffener mould tool part is configured to form a single continuous mould surface with the structural member mould tool part when the stiffener mould tool part has a predetermined thickness of composite material applied thereto.

14. A mould tool assembly according to any of claims 11 to 13 in which:
the structural member mould tool part comprises a male formation for moulding a female part of a structural member,
the stiffener mould tool part comprises a male formation for moulding a female part of a stiffener,
and in which the male formation of the structural member mould tool comprises a formation for receiving the male formation of the stiffener mould tool.

15. A mould tool assembly according to any of claims 11 to 14 in which the structural member mould tool and stiffener mould tool comprise corresponding joining features for separable mechanical joining in use.

16. A mould tool assembly according to any of claims 11 to 15 in which the structural member is a spar for a wing or stabiliser.

17. An aircraft wing assembly as defined herein with reference to, or in accordance with, the accompanying drawings.

18. A method of manufacturing an aircraft wing spar as defined herein with reference to, or in accordance with, the accompanying drawings.

19. A mould tool assembly as defined herein with reference to, or in accordance with, the accompanying drawings.
